# EUROPÄISCHE PATENTSCHRIFT

(11) **EP 2 764 979 B1**
(45) Veröffentlichungstag und Bekanntmachung des Hinweises auf die Patenterteilung: **28.03.2018**
(21) Anmeldenummer: 14154709.1
(22) Anmeldetag: 11.02.2014
(51) Int. Cl.: B29C 49/18, B65D 1/02, B29C 49/06, B29C 49/78

(54) **Kunststoffbehältnis**
Plastic container
Récipient en matière plastique

(30) Priorität: 11.02.2013 DE 102013101332
(43) Veröffentlichungstag der Anmeldung: 13.08.2014
(73) Patentinhaber: Krones AG, 93073 Neutraubling (DE)
(72) Erfinder: Wortmann, Jörg, 93073 Neutraubling (DE); Hüttner, Gerald, 93073 Neutraubling (DE); Tißmer, Bastian, 93073 Neutraubling (DE)
(74) Vertreter: Bittner, Bernhard

(56) Entgegenhaltungen:
- WO-A1-2011/157952
- DE-A1-102010 064 125
- US-A- 5 785 197
- US-A1- 2008 223 816
- NN - Forumsbeiträge: "Freiformflächen", Forum CAD.DE , 27 April 2002 (2002-04-27), Retrieved from the Internet: URL:http://ww3.cad.de/foren/ubb/Forum4/HTM L/000482.shtml [retrieved on 2017-03-09]

## Beschreibung

Die vorliegende Erfindung bezieht sich auf ein Kunststoffbehältnis, insbesondere zur Aufnahme von Getränken. Derartige Behältnisse sind aus dem Stand der Technik seit längerer Zeit bekannt und lösen zunehmend Glasflaschen als Getränkebehältnisse ab. Der Vorteil dieser Kunststoffbehältnisse besteht insbesondere in dem geringeren Gewicht, der optimalen Handhabbarkeit bezüglich Design und teilweise in der mehrfachen Verwendbarkeit. Aus dem Stand der Technik sind diverse Flaschen unterschiedlichster Größen sowohl für kleine Füllmengen im Bereich von 200 ml bis hin zu großen Füllmengen von 5 I bekannt. Diese Behältnisse weisen dabei die unterschiedlichsten Formen auf. Im Rahmen von Herstellungsverfahren werden Vorformlinge, beispielsweise mittels Luftdruck, zu den Kunststoffbehältnissen aufgeblasen bzw. expandiert. Zu diesem Zweck werden Vorformlinge üblicherweise in eine Form eingegeben und gegenüber dieser Form expandiert.

Zur Kosteneinsparung wird versucht, die Kunststoffbehältnisse mit immer weniger Materialaufwand herzustellen. Dies bedeutet jedoch andererseits, dass an die Stabilität der Flaschen im Verhältnis zu der verwendeten Materialmenge zunehmend höhere Anforderungen zu stellen sind.

Insbesondere die Böden dieser Kunststoffbehältnisse sind besonders kritisch. Einerseits müssen diese Böden auch als Standflächen für die Behältnisse dienen und andererseits auch zum Teil höheren Innendrücken standhalten. Gleichzeitig sollen auch die Böden mit immer geringerem Materialaufwand hergestellt werden.

Die vorliegende Erfindung bezieht sich insbesondere auf Behältnisse für sogenannte Stillwässer und leicht druck - beaufschlagte Produkte. Bei diesen Produkten war die Ausprägung, insbesondere der Fußradien der Flaschenböden an den Rillen des Bodens nur mit einem hohen Fertigblasdruck von über 30 bar möglich. Dies bedeutet jedoch einen erhöhten Energieaufwand bei der Herstellung derartiger Behältnisse. Weiterhin weist ein derart hoher Fertigblasdruck von über 30 bar zur Ausformung der Fußradien der Rillen eines Bodendesigns auch keine Sicherheit für Druckstabilität ohne eine Abmusterung der Flasche in dem gefüllten Zustand auf. WO 2011/157952 A offenbart ein Kunststoffbehältnis mit den Merkmalen des Oberbegriffs des Anspruchs 1.

Auch aus DE 2010 064 125 A ist ein Kunststoffbehältnis mit einem Boden dieser Art bekannt.

Der Erfindung liegt die Aufgabe zugrunde, ein kostengünstiges Herstellen des Kunststoffbehältnisses zur Verfügung zu stellen, welches gleichwohl auch bestimmten Innendrücken standhält. Insbesondere soll dabei ein Kunststoffbehältnis zur Verfügung gestellt werden, welches auch mit geringeren Fertigblasdrücken erzeugt werden kann. Auch bei der Abfüllung von stillen Getränken, insbesondere ohne Kohlensäure, muss das Kunststoffbehältnis geringen Innendrücken standhalten, die beispielsweise durch erhöhte Außentemperaturen in der Umgebung des Kunststoffbehältnisses hervorgerufen werden können.
Diese Aufgabe wird erfindungsgemäß durch den Gegenstand von Anspruch 1 erreicht.
Vorteilhafte Ausführungsformen und Weiterbildungen sind Gegenstand der Unteransprüche. Ein erfindungsgemäßes Kunststoffbehältnis zur Aufnahme von Getränken weist eine Mündung auf, einen sich in einer Längsrichtung des Kunststoffbehältnisses an diese Mündung anschließenden Wandabschnitt und einen als Standfläche ausgebildeten Bodenabschnitt (der sich an den Wandabschnitt anschließt). Dabei ist das Kunststoffbehältnis einteilig ausgebildet und der Bodenabschnitt weist einen in einer radialen Richtung bezüglich der Längsrichtung innenliegenden Anspritzpunkt an der Außenwandung des Kunststoffbehältnisses auf. Weiterhin weist das Kunststoffbehältnis einen diesen Anspritzpunkt umgebenden Zentralbereich auf sowie einen sich von diesem Zentralbereich zu dem Wandabschnitt erstreckenden Übergangsabschnitt, wobei dieser Übergangsabschnitt in wenigstens einer und bevorzugt in jeder radialen Richtung des Kunststoffbehältnisses in wenigstens einem Teilabschnitt eine Krümmung mit einem endlichen Krümmungsradius aufweist und wobei in dem Bodenabschnitt eine Vielzahl von Verstärkungsrippen vorgesehen ist, die sich ausgehend von dem Zentralbereich in Richtung des Wandabschnitts erstrecken. Ferner weist der Zentralbereich eine erste domartige Struktur auf, derart, dass der Anspritzpunkt in der Längsrichtung des Kunststoffbehältnisses in Richtung der Mündung des Kunststoffbehältnisses ragt, wobei sich an diese erste domartige Struktur des Zentralbereichs in der zentralen Richtung nach außen eine zweite domartige Struktur anschließt, wobei diese zweite domartige Struktur in Richtung der Mündung des Kunststoffbehältnisses gewölbt ist, wobei ein Krümmungsradius der ersten domartigen Struktur wenigstens abschnittsweise geringer ist, als ein Krümmungsradius der zweiten domartigen Struktur.
Durch diese Ausgestaltung des Behältnisses ist es möglich, dass der Fertigblasdruck für die Behältnisse auf weniger als 20 bar reduziert werden kann. Bei diesem Fertigblasdruck lässt sich die hier beschriebene Bodengeometrie sehr gut ausformen. Weiterhin zeichnet sich das hier beschriebene Bodendesign durch eine Sicherheit für die Druckstabilität in gefülltem Zustand aus und ist in einem gefüllten Zustand auch nach Thermostabilitätstests von mehr als 38° über 24 Stunden druckstabil. Dabei kann dieses Behältnis Drücke im Bereich von wenigstens 0,5 bar standhalten. In bevorzugten, unten genauer beschriebenen Ausführungsformen, kann auch Drücken im Bereich von wenigstens 0,8 bar standgehalten werden. Auch weist der besagte Zentralbereich einen kreisförmigen Querschnitt auf und ist, wie oben erwähnt, domartig oder kuppelartig ausgebildet. Auf diese Weise ragt der Anspritzpunkt des Behältnisses selbst in Richtung des Innenvolumens, was dazu führt, dass auch bei einer Druckbelastung der Anspritzpunkt nicht in der Längsrichtung des Behältnisses nach unten hervorsteht und dessen Standsicherheit behindert.
Die zweite domartige Struktur dient insbesondere auch zur Aufnahme von Drücken bzw. um diesen entgegen zu wirken. Bevorzugt weist der Zentralbereich in seinem vollständigen Bereich einen geringeren Krümmungsradius auf, als die zweite domartige Struktur. Dabei ist es möglich, dass diese Krümmungsradien konstant sind, es wäre jedoch auch denkbar, dass sich die Krümmungsradien in einem radialen Verlauf der Wandung ändern. Erfindungsgemäß liegt ein Krümmungsradius in der ersten domartigen Struktur des Zentralbereichs in einem Bereich zwischen 5,00 mm und 20,0 mm, insbesondere zwischen 8,0 mm und 15,0 mm. Der Krümmungsradius in dem zweiten domartigen Bereich bzw. der zweiten domartigen Struktur liegt in einem Bereich zwischen 40,0 mm und 120 mm, insbesondere zwischen 50,0 mm und 90,0 mm, und ein Verhältnis zwischen dem Krümmungsradius in der ersten domartigen Struktur und dem Krümmungsradius in der zweiten domartigen Struktur liegt 5 zwischen 0,02 und 0,5. Bevorzugt bleibt der Krümmungsradius in den jeweiligen Bereichen jeweils im Wesentlichen konstant. Unter im Wesentlichen konstant wird hierbei verstanden, dass sich der Krümmungsradius gegenüber einem Mittelwert entlang des gekrümmten Bereichs um nicht mehr als 10°, bevorzugt um nicht mehr als 5°, besonders bevorzugt um nicht mehr als 3° ändert.
Dabei werden die besagten Verläufe bzw. deren Krümmungsradius jeweils betrachtet in einer Projektion in einer zu der Längsrichtung des Kunststoffbehältnisses senkrecht stehenden Richtung. Auch die zweite domartige Struktur ist damit in Richtung des Innenvolumens des Behältnisses gewölbt. Ferner geht wenigstens ein Abschnitt des Bodenabschnitts in einen weiteren Abschnitt des Bodenabschnitts tangentenstetig über. So kann es beispielsweise sein, dass ein erster Abschnitt mit einem ersten Krümmungsradius, in einem zweiten Abschnitt mit einem zweiten hiervon abweichenden Krümmungsradius tangentenstetig übergeht.
Die Tangentenstetigkeit bezieht sich dabei, wie erwähnt, auf einen Übergang eines ersten Abschnitts bzw. eines ersten Kurvenabschnitts oder Splines in eine angrenzende Kurve, bei der es sich ebenfalls um eine Gerade, einen Spline oder einen gekrümmten Abschnitt handeln kann. Dabei soll im Übergang ein Winkel von 180° erreicht werden. Zu diesem Zweck wird beispielsweise bei einem Spline erster Ordnung dieser Spline über seinen ersten Stützpolynom derart gedreht, dass ein 180°-Einlauf erreicht wird.

Bevorzugt gehen wenigstens zwei Abschnitte des Bodenabschnitts in jeweils einen weiteren Abschnitt des Bodenabschnitts tangentenstetig über. So ist es beispielsweise möglich, dass der Radius des Zentralbereiches in den sich nach außen anschließenden ersten Radius des Übergangsbereiches tangentenstetig übergeht. Auch kann ein erster Radius des Übergangsbereiches in einen weiteren radial außen liegenden Bereich des Übergangsbereiches tangentenstetig übergehen. Weiterhin kann auch ein Radius des Krümmungsbereiches in einen Radius eines Fußes des Behältnisses tangentenstetig übergehen. Daneben ist es auch möglich, dass ein gekrümmter Abschnitt eines Fußbereiches des Behältnisses in einen Abschnitt der Wandung des Behältnisses tangentenstetig übergeht.

Bei einer weiteren vorteilhaften Ausführungsform ist eine Standfläche des Kunststoffbehältnisses wenigstens abschnittsweise ringförmig ausgebildet, wobei diese Standfläche einen vorgegebenen Standkreisdurchmesser aufweist. Unter einen abschnittsweise ringförmigen Verlauf wird verstanden, dass es sowohl sich um einen durchgehenden ringförmigen Verlauf handeln kann, bevorzugt jedoch dieser ringförmige Verlauf wenigstens einmal und bevorzugt mehrere Male, insbesondere durch die oben erwähnten Verstärkungsrippen unterbrochen ist.

Bei einer weiteren vorteilhaften Ausführungsform ist ein Verhältnis zwischen dem Standkreisdurchmesser und einem Außendurchmesser des Kunststoffbehältnisses zwischen 0,5 und 0,95, bevorzugt zwischen 0,6 und 0,95, besonders bevorzugt zwischen 0,615 und 0,935, bevorzugt zwischen 0,65 und 0,9 und besonders bevorzugt zwischen 0,65 und 0,85.

Bei einer weiteren vorteilhaften Ausführungsform weist der Bodenabschnitt in dem Bereich einer Standfläche des Bodenabschnitts einen Abschnitt mit einem im Wesentlichen geradlinigen Verlauf auf. Insbesondere ist ein Bereich innerhalb der Standfläche im Wesentlichen geradlinig ausgebildet. Dabei schließt sich vorteilhaft dieser geradlinige Abschnitt an den zweiten domartigen Körper bzw. die zweite domartige Struktur wenigstens mittelbar in der radialen Richtung des Behältnisses nach außen an.

Weiterhin kann sich an diesem geradlinigen Verlauf ein sogenannter Spline des Bodenbereiches anschließen, das heißt ein Verlauf, der durch ein Polynom n- ter Ordnung gebildet wird.

Unter einem im Wesentlichen geradlinigen Verlauf wird verstanden, dass ein Krümmungsradius in diesem Bereich wenigstens doppelt so groß ist wie die Krümmungsradien der anderen Bereiche, bevorzugt wenigstens dreimal so groß, bevorzugt wenigstens fünfmal so groß, bevorzugt wenigstens zehnmal so groß. Es kann sich jedoch auch um einen unendlichen Krümmungsradius, das heißt um einen exakt geradlinigen Verlauf handeln.

Bevorzugt weist dieser im Wesentlichen geradlinig verlaufende Abschnitt eine Länge auf, die zwischen 0,01 mm und 2 mm liegt.
Bei einer weiteren vorteilhaften Ausführungsform weist das Kunststoffbehältnis eine Vielzahl von gleichartigen ersten Verstärkungsrippen auf, sowie eine Vielzahl von zweiten bevorzugt gleichartigen Verstärkungsrippen, wobei sich die ersten Verstärkungsrippen und die zweiten Verstärkungsrippen geometrisch voneinander unterscheiden. So sind bevorzugt wenigstens drei erste Verstärkungsrippen vorgesehen, bevorzugt wenigstens vier erste Verstärkungsrippen, bevorzugt wenigstens fünf erste Verstärkungsrippen und besonders bevorzugt fünf erste Verstärkungsrippen. Weiterhin sind bevorzugt wenigstens drei zweite Verstärkungsrippen, besonders bevorzugt wenigstens vier zweite Verstärkungsrippen und besonders bevorzugt wenigstens fünf zweite Verstärkungsrippen vorgesehen und besonders bevorzugt genau fünf zweite Verstärkungsrippen. Dabei sind die ersten und die zweiten Verstärkungsrippen bevorzugt in der Umfangsrichtung des Bodenabschnitts abwechselnd zueinander angeordnet.
Bei einer weiteren vorteilhaften Ausführungsform ist eine Standfläche des Kunststoffbehältnisses wenigstens von den ersten Verstärkungsrippen unterbrochen. Bevorzugt ist die Standfläche auch von den zweiten Verstärkungsrippen unterbrochen.
Bei einer weiteren bevorzugten Ausführungsform weisen die Verstärkungsrippen, im Folgenden auch als Rillen bezeichnet in einer radialen Richtung unterschiedliche Längen auf. Dabei reichen bevorzugt die längeren Rillen, das heißt die ersten Verstärkungsrippen, an den oben erwähnten Zentralbereich heran und bevorzugt schneidet sie diesen wenigstens abschnittsweise. Die zweiten Verstärkungsrippen reichen bevorzugt nicht an den Zentralbereich heran. Vorteilhaft erstrecken sich die ersten und die zweiten Verstärkungsrippen in der radialen Richtung gleich weit nach außen und weisen bevorzugt in diesem Bereich einen im Wesentlichen gleichartiges Profil auf.

Die vorliegende Erfindung ist weiterhin auf eine Blasform zum Herstellen eines Kunststoffbehältnisses der oben beschriebenen Art gerichtet. Kunststoffvorformlinge werden in an sich bekannter Weise erwärmt und innerhalb der Blasform expandiert, wobei ein Bodenteil dieser Blasform derart gestaltet ist, dass es einen Bodenabschnitt eines Kunststoffbehältnisses nach wenigstens einem der vorangegangenen Ansprüche erzeugt. Die Kunststoffvorformlinge können zu ihrer Expansion mit einem gasförmigen Medium mit wenigstens zwei unterschiedlichen Druckstufen beaufschlagt werden, wobei eine dieser Druckstufen ein Fertigblasdruck ist und dieser Fertigblasdruck unter 30 bar, bevorzugt unter 25 bar und besonders bevorzugt unter 20 bar liegt. Durch diese gewählten Druckstufen kann eine erhebliche Energieeinsparung bei der Umformung erreicht werden. Andererseits sind jedoch diese Druckstufen ausreichend, um den entsprechenden Bodenabschnitt zu erzeugen. Bevorzugt liegt eine zeitliche Dauer der Beaufschlagung mit dem Fertigblasdruck zwischen 0,9 Sekunden und 2,2 Sekunden.
Die vorliegende Erfindung ist weiterhin auf die Verwendung eines Kunststoffbehältnisses der oben beschriebenen Art zur Befüllung mit einem stillen Getränk, beispielsweise einem Stillwasser, gerichtet. Derartige Getränke verursachen bevorzugt innerhalb des Behältnisses in einem geschlossenen Zustand desselben einen Innendruck von weniger als 1,5 bar, insbesondere von weniger als 1,0bar. Die vorerwähnte Blasform weist vorteilhaft auch zwei Seitenteile auf, welche zur Erzeugung einer Umfangswandung des Kunststoffbehältnisses dienen.
Weitere Vorteile und Ausführungsformen ergeben sich aus den beigefügten Zeichnungen. Darin zeigen:
- Fig. 1a, 1b: zwei Darstellungen von erfindungsgemäßen Behältnissen;
- Fig. 2: eine Darstellung einer Außenkontur eines erfindungsgemäßen Behältnisses in einer ersten Ausführungsform;
- Fig. 3: eine weitere Darstellung einer Außenkontur eines erfindungsgemäßen Behältnisses in einer ersten Ausführungsform;
- Fig. 4: eine Darstellung einer Außenkontur eines erfindungsgemäßen Behältnisses in einer zweiten Ausführungsform;
- Fig. 5: eine weitere Darstellung einer Außenkontur eines erfindungsgemäßen Behältnisses in einer zweiten Ausführungsform;
- Fig. 6: eine Darstellung einer Innenkontur eines erfindungsgemäßen Behältnisses;
- Fig. 7: eine weitere Darstellung einer Innenkontur eines erfindungsgemäßen Behältnisses;
- Fig. 8: eine Draufsicht auf einen Bodenabschnitt eines erfindungsgemäßen Behältnisses;
- Fig. 9: eine Darstellung zur Veranschaulichung der Rillensegmente;
- Fig. 10: eine weitere Darstellung zur Veranschaulichung der Rillensegmente;
- Fig. 11a - 11d: vier perspektivische Darstellungen eines Bodenabschnitts;
- Fig. 12: eine weitere perspektivische Darstellung eines Bodenabschnitts;
- Fig. 13: eine weitere Draufsicht auf einen Bodenabschnitt;
- Fig.14: eine Seitenansicht eines Bodenabschnitts;
- Fig. 15: eine Schrägansicht eines Bodenabschnitts;
- Fig. 16: eine Schnittdarstellung eines Bodenabschnitts; und
- Fig. 17a - c: drei teilweise perspektivische Darstellungen eines Bodenabschnitts.

Die folgenden Figuren beschreiben ein Bodendesign, insbesondere für stille und leicht druckbeaufschlagte Produkte bis 2,0 bar Innendruck. Typische Füllmengen derartiger Behältnisse liegen zwischen 200ml und 5,01 , wobei ein niedriger Fertigblasdruck verwendet wird und eine verbesserte Ausformbarkeit der Bodengeometrie gewährleistet ist.

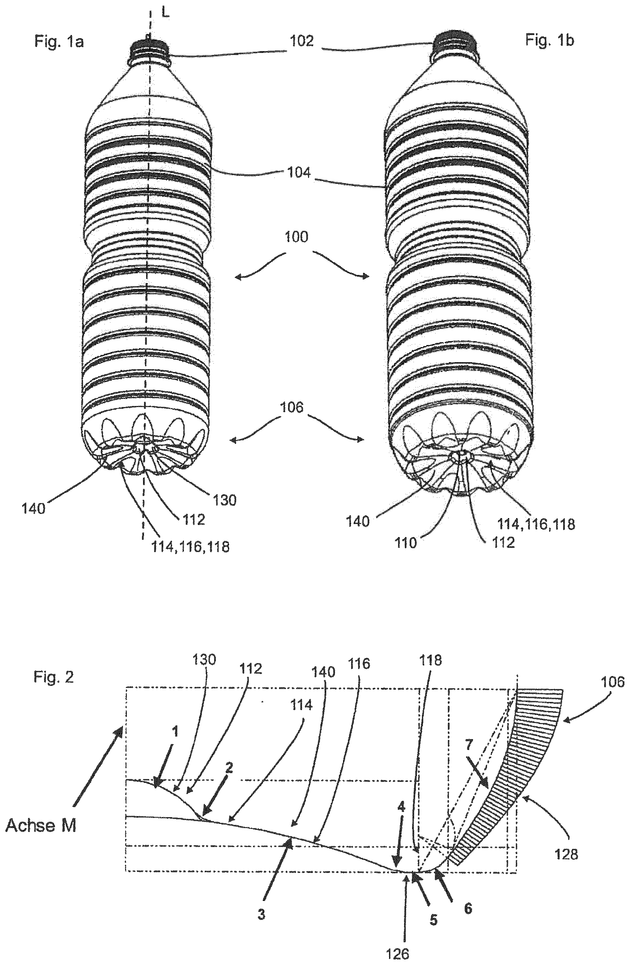

Die Fig. 1a und 1b zeigen Darstellungen eines erfindungsgemäßen Behältnisses 100 in zwei möglichen Ausführungsformen. Dabei weist das Behältnis 100 jeweils einen Mündungsbereich 102 auf, der einen gegenüber einem Durchmesser des Behältnisses 100 verringerten Durchmesser aufweist. An diesen Mündungsbereich 102 schließt sich ein umlaufender Wandabschnitt 104 auf, der das in dem Behältnis befindliche Flüssigkeitsvolumen umgibt. Das Bezugszeichen L kennzeichnet die Längsrichtung des Kunststoffbehältnisses. An den Wandabschnitt 104 schließt sich ein Bodenabschnitt 106 des Behältnisses an, der im Folgenden genauer betrachtet werden soll.

Dieser Bodenabschnitt 106 weist dabei den bei derartigen Kunststoffbehältnissen typischen Anspritzpunkt 110 auf, der in einem Zentralbereich 112 angeordnet ist. Dieser Zentralbereich 112 weist hierbei, wie in der Figuren erkennbar, eine domartige Struktur auf, die sich in das Innere des Behältnisses 100 erstreckt. An diesen Zentralbereich 112 schließt sich ein Übergangsbereich an, der sich auch in einer zu der Längsrichtung L senkrecht stehenden radialen Richtung des Behältnisses in Richtung des Wandabschnitts 104 erstreckt. Dieser Übergangsabschnitt weist wiederum mehrere Unterabschnitte 114, 116, 118 auf, die gemeinsam diesen Übergangsabschnitt ausbilden. Dabei können jedoch diese Unterabschnitte ineinander übergehend ausgebildet sein. Man erkennt, dass auch dieser Übergangsabschnitt eine domartige Struktur aufweist, welche sich in Richtung des Zentralbereichs nach innen d.h. auf das Innenvolumen des Behältnisses hin zu erstreckt. Allerdings erkennt man, dass der Zentralbereich deutlich stärker gekrümmt ist als der Übergangsbereich.

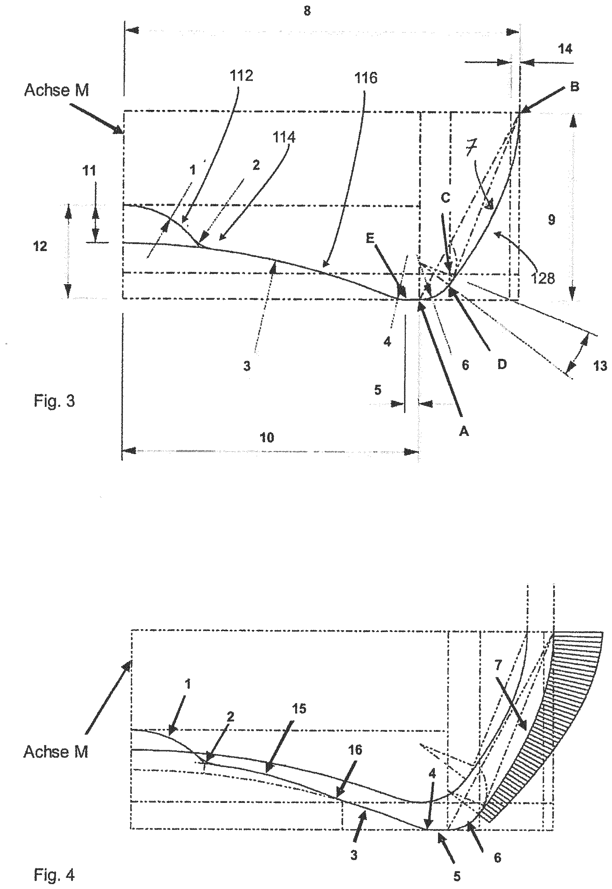

Die Figuren 2 und 3 beschreiben eine äußere Basiskontur eines erfindungsgemäßen Behältnisses in einer ersten Ausführungsform. Es wird explizit darauf hingewiesen, dass die Merkmale der nun im Einzelnen beschriebenen Ausgestaltungen nicht nur in ihrer Kombination sondern auch einzeln anwendbar sind. So können beispielsweise unterschiedliche Krümmungsverläufe der unterschiedlichen Ausgestaltungen auch miteinander kombiniert werden. Gleiches gilt auch für die anderen nachfolgend beschriebenen Dimensionen.

Eine erste Variante der äußeren Basiskontur wird durch den kleinen Domradius 1, den Radius 2, den Außen - Domradius 3, den Innen - Fußradius 4, die Gerade 5, den Fußradius 6 und einem Spline 7 beschrieben. Durch die Gerade 5 wird hier insbesondere auch eine Standfläche des Kunststoffbehältnisses definiert. Man erkennt, dass der Radius 2 (und auch der Radius 4) gegenläufig bezüglich Radien 1 und 3 ist, d.h. die Krümmung ist in diesem Bereich gegenüber der Umgebung umgekehrt. Auf diese Weise ist es möglich, dass die stärkere Krümmung in dem Zentralbereich 112, gegeben durch den kleinen Domradius 1 in die schwächere Krümmung in dem ersten Unterabschnitt 114 des Übergangsabschnitts übergehen kann.

Bevorzugt sind die Krümmungsradien in den genannten Unterabschnitten des Bodenabschnitts jeweils im Wesentlichen konstant.

Damit ist hier neben der ersten domartigen Struktur 130 des Zentralbereichs noch eine zweite domartige Struktur 140 des Übergangsbereichs vorhanden.

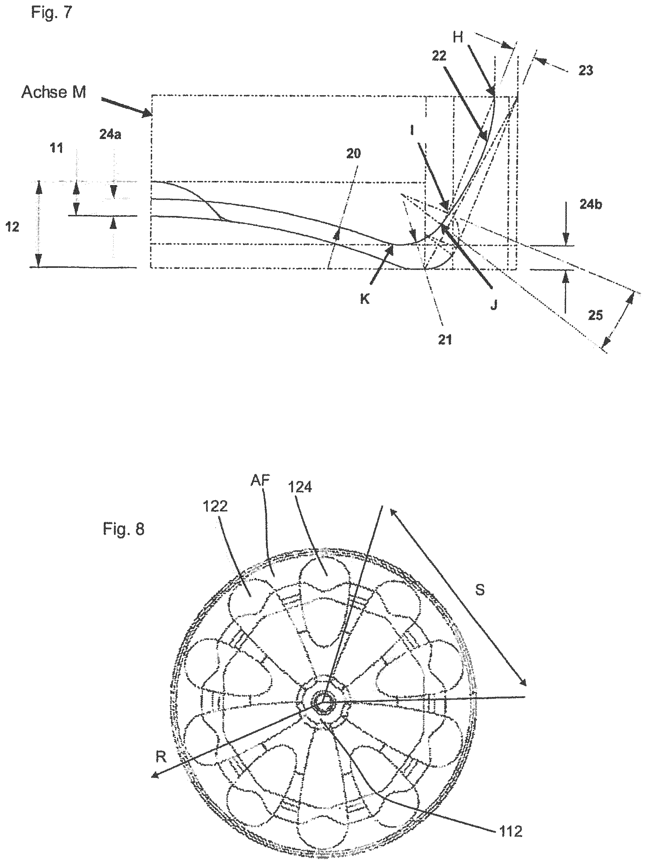

Aus dieser Kontur wird die in der Fig. 8 gezeigte sogenannte Außenfläche AF der Bodengeometrie bzw. des Bodenabschnitts 106 durch eine Rotation um die Rotationsachse M erzeugt.

Die Übergänge der genannten Radien (bei denen es sich insbesondere um Krümmungsradien handelt) d.h. des kleinen Domradius 1, des Radius 2, des Außen - Domradius 3, des Innen Fußradius 4 und Fußradius 6, sind wenigstens zum Teil und bevorzugt alle tangentenstetig. Der Übergang von Fußradius 6 zu dem Spline 7, kann krümmungsstetig, mindestens aber tangentenstetig sein. Der Spline 7 geht bevorzugt krümmungsstetig, besonders bevorzugt mindestens tangentenstetig, in den Außendurchmesser 128 (vgl. Fig. 3) über. Der Krümmungsverlauf des Splines 7 kann durch ein Polynom n-ten Grades beschrieben werden, wobei n bevorzugt größer oder gleich 2 und kleiner 7 ist.

Die Außendimensionen des Bodens werden durch den Außendurchmesser 8 und die Bodenhöhe 9 festgelegt. Das Maß des Standkreisdurchmessers 10 wird bevorzugt durch ein Verhältnis zu dem Außendurchmesser 8 festgelegt. Dieses Verhältnis kann sich beispielsweise zwischen 0,615 und 0,935 bewegen, insbesondere zwischen 0,65 und 0,85.

Die Gerade bzw. Strecke AE (vgl. Fig. 3) kann eine Länge zwischen 0,01mm und 2,0mm haben oder wird bevorzugt durch ein Verhältnis zu dem Außendurchmesser 8 angegeben.

Der Innen - Fußradius 4 kann gleich groß, größer oder kleiner als der Fußradius 6 sein. Der Fußradius kann auch über ein Verhältnis zu dem Außendurchmesser 8 definiert werden.

Die Höhe 12 des kleinen Domradius 1 und die Höhe 11 des Außen- Domradius 3 werden bevorzugt beide durch unterschiedliche Verhältnisse zu dem Außendurchmesser 8 beschrieben.
Der Anfangspunkt D des Splines 7 (betrachtet ausgehend von der geometrischen Mitte des Bodenabschnitts) wird hier durch eine Gerade zwischen B und C erzeugt. Die Gerade BC ist hier tangential am Fußradius. Der Anfangspunkt D des Splines 7 kann mit Hilfe eines Winkels 13 auf dem Fußradius 6 zwischen den Punkten A und C bestimmt werden.
Das Abstandsmaß 14 wird zur Abstandsdefinition der Rillenausschnittsgeometrien verwendet.
Damit setzt sich bei der in den Figuren 2 und 3 gezeigten Ausgestaltung des Bodenabschnitts dieser aus wenigstens zwei unterschiedlich gekrümmten Bereichen sowie einem geradlinig verlaufenden Abschnitt sowie einem sich hieran anschließenden Spline zusammen. Der Bodenabschnitt ist insgesamt, wie oben erwähnt, kreisförmig ausgebildet.
Die hier beschriebene äußere Basiskontur, auch als "Basiskontur Außen" bezeichnet, bezieht sich auf die Außenhaut des Bodens und ist beispielsweise in Fig. 7 durch die Kontur zwischen dem Bezugszeichen 11 und bis hoch zu dem Bezugszeichen 23 dargestellt. Insbesondere handelt es sich hierbei um die Bereiche bzw. Abschnitte außerhalb der Rippen bzw. Rillen.

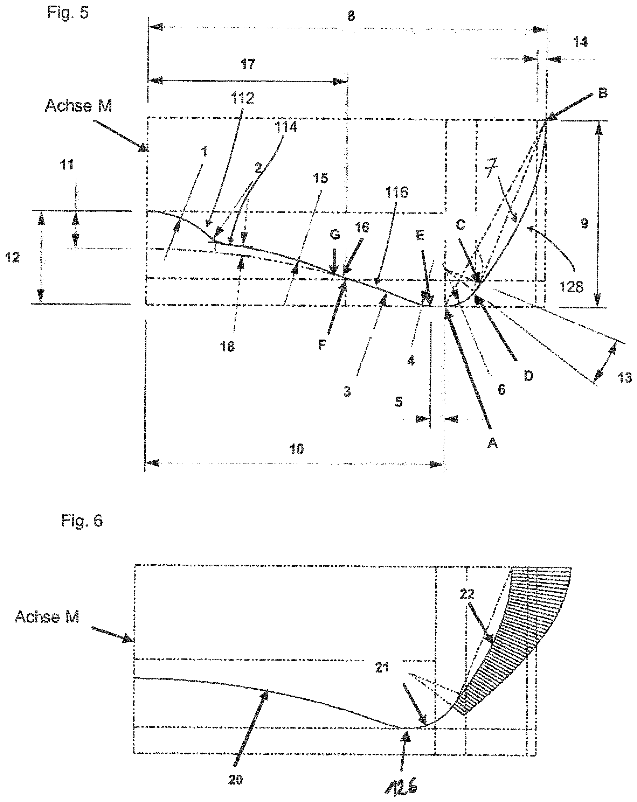

Die Fig. 4 und 5 zeigen eine äußere Basiskontur für eine weitere vorteilhafte Ausgestaltung eines erfindungsgemäßen Behältnisses. Es wird darauf hingewiesen, dass die bei der in den Figuren 2 und 3 und die bei der in den Figuren 4 und 5 gezeigten Merkmale auch miteinander verbunden und/oder kombiniert werden können, um zu weiteren möglichen und im Rahmen dieser Erfindung liegenden Ausgestaltungen zu gelangen.
Die Figuren 4 und 5 beschreiben insbesondere eine Ausgestaltung unter Verwendung eines Doppeldoms (genauer gesagt einer Struktur mit zwei domartigen Unterstrukturen bei Außerachtlassung der domartigen Struktur des Zentralbereichs):

Diese Variante der Basiskontur Außen wird durch den kleinen Domradius 1, den Radius 2, den Innen - Domradius 15, den Verbindungsradius 16, den Außen - Domradius 3, den Innen - Fußradius 4, der Geraden 5, den Fußradius 6 und einem Spline 7 beschrieben. Aus dieser Kontur wird die sogenannte Außenfläche AF (vgl. Fig. 8) der Bodengeometrie durch eine Rotation um die Rotationsachse M erzeugt.
Damit sind hier neben der ersten domartigen Struktur 130 des Zentralbereichs noch eine zweite domartige Struktur 140 (gegeben durch den Innendomradius 15) sowie eine dritte domartige Struktur (gegeben durch den Außendomradius 3 des Übergangsbereichs) vorhanden, wobei sich diese dritte domartige Struktur 126 in radialer Richtung R nach außen an die zweite domartige Struktur anschließt. Die zweite domartige Struktur und die dritte domartige Struktur bilden damit einen Doppeldom aus.
Die Krümmungsradien dieser beiden domartigen Strukturen unterscheiden sich dabei jedoch nur geringfügig und ihr Verhältnis liegt in einem Bereich zwischen 0,2 und 0,9, insbesondere zwischen 0,3 und 0,85.

Die Übergänge der Radien, kleiner Domradius 1, Radius 2, Innen - Domradius 15, Verbindungsradius 16, Außen - Domradius 3, Innen - Fußradius 4, Fußradius 6, sind wenigstens zum Teil und bevorzugt alle tangentenstetig. Der Übergang von dem Fußradius 6 zu dem Spline 7 kann krümmungsstetig, mindestens aber tangentenstetig sein. Der Spline 7 geht krümmungsstetig, mindestens tangentenstetig, in den Außendurchmesser 8 bzw. 128 über. Der Krümmungsverlauf des Splines 7 kann durch ein Polynom n-ten Grades beschrieben werden, wobei n größer oder gleich 2 und kleiner als 7 ist.
Die Außendimensionen des Bodens werden durch den Außendurchmesser 8 und die Bodenhöhe 9 festgelegt. Das Maß des Standkreisdurchmessers 10 wird durch ein Verhältnis zu dem Außendurchmesser 8 festgelegt. Dieses Verhältnis kann sich zwischen 0,615 und 0,935 bewegen, insbesondere zwischen 0,65 und 0,85.

Die Höhe des Innen - Domradius 15 zum Außen - Domradius 3 wird über das Abstandsmaß 18, definiert, welches insbesondere zwischen 0,4 mm und 3,0 mm liegt. Der Verbindungsradius 16 kann einen Wert zwischen 1,0 mm und 15 mm, insbesondere zwischen 3,0 mm und 10,0 mm haben. Der Verbindungsradius 16 schließt im Punkt G an den Innen - Domradius 15 an und geht im Punkt F in den Außen - Domradius 3 über.

Das Maß 17 des Innen - Domdurchmessers am Punkt F wird durch ein Verhältnis zum Außendurchmesser 8 festgelegt. Dieses Verhältnis kann sich zwischen 0,3 und 0,6 bewegen. Die Gerade AE kann eine Länge zwischen 0,01 mm und 2,0 mm, insbesondere zwischen 0,5 mm und 1,5 mm haben oder wird durch ein Verhältnis zum Außendurchmesser angegeben. Der Innenradius 4 kann gleich groß, größer oder kleiner als der Fußradius 6 sein. Der Fußradius kann auch über ein Verhältnis zum Außendurchmesser 8 definiert werden.

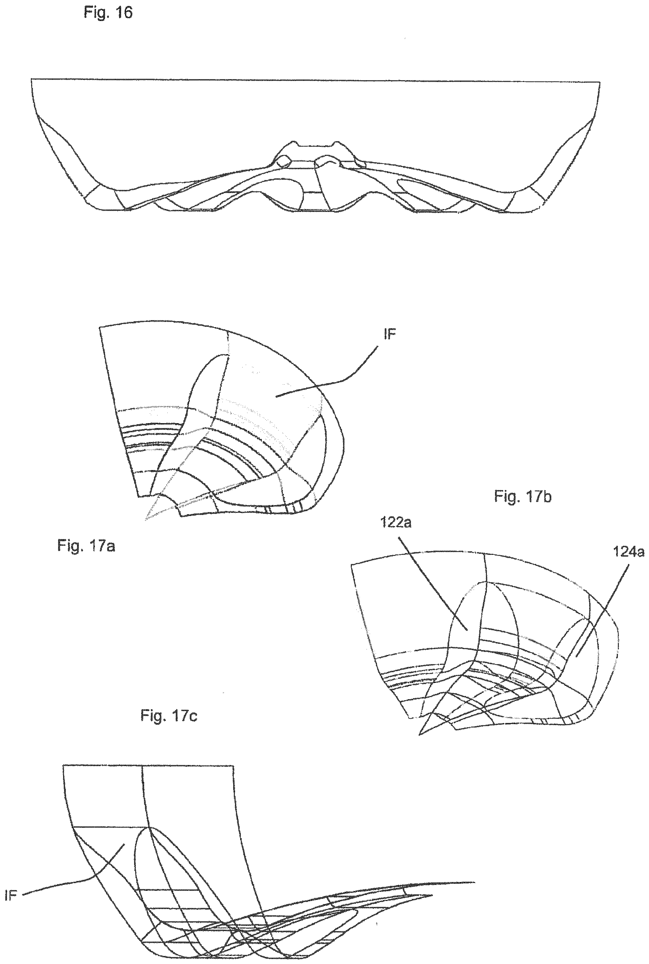

Die Höhe 12 des kleinen Domradius und die Höhe 11 des Außen - Domradius werden beide durch unterschiedliche Verhältnisse zum Außendurchmesser 8 beschrieben. Der Anfangspunkt D des Splines 7 wird durch eine Gerade zwischen B und C erzeugt. Die Gerade BC ist tangential am Fußradius. Der Anfangspunkt D des Splines 7 kann mit Hilfe eines Winkels 13 auf dem Fußradius 6 zwischen den Punkten A und C bestimmt werden. Das Abstandsmaß 14 wird zur Abstandsdefinition der Rillenausschnittsgeometrien verwendet.
Die Figuren 6 und 7 beschreiben eine innere Basiskontur bzw. eine "Basiskontur - innen". Hierbei handelt es sich um die Kontur des Bodens, in der die unten noch genauer gezeigten Rillen bzw. Verstärkungsrippen angeordnet sind, wie beispielsweise in Fig. 7 zwischen den Bezugszeichen 24a und H erkennbar.
Die innere Basiskontur bzw. die Basiskontur Innen wird durch den Innenkontur - Domradius 20, den Innenkontur Fußradius 21 und einen Spline 22 beschrieben. Aus dieser Kontur wird die sogenannte Innenfläche IF (vgl. Fig. 17a) der Bodengeometrie durch eine Rotation um die Rotationsachse M erzeugt.
Die Übergänge der Radien, Innenkontur Domradius 20, Innenkontur Fußradius 21 sind wenigstens zum Teil und bevorzugt alle tangentenstetig zueinander ausgebildet. Der Übergang von dem Innenkontur Fußradius zu dem Spline 22 kann bevorzugt krümmungsstetig sein, insbesondere mindestens aber tangentenstetig sein. Der Spline 22 geht bevorzugt krümmungsstetig, mindestens jedoch tangentenstetig, in eine Gerade, die bevorzugt parallel zu Außendurchmesser 8 ist in dem Punkt H über. Die Gerade HI (Fig.7) ist bevorzugt parallel zu der in Fig. 3 gezeigten Gerade BC und der Abstand beider Geraden kann über das Maß bzw. den Abstand 23 definiert werden. Der Krümmungsverlauf des Splines 22 für die Innenkontur kann durch ein Polynom n-ten Grades beschrieben werden, wobei n insbesondere größer oder gleich 2 und kleiner als 7 ist.

Der Abstand zwischen der Basiskontur Innen und der Basiskontur Außen wird über das Maß 24a von der Innenkontur Domradius bis zu der Außenkontur Domradius definiert. Der Abstand zwischen der Basiskontur Innen (Punkt K) und der Basiskontur Außen (Punkt A in Fig. 3) wird auf Höhe des Standkreisdurchmessers über das Maß 24b definiert. Die Abstände zwischen der Basiskontur Innen und der Basiskontur Außen sind bevorzugt im Zentrum und auf Höhe des Standkreisdurchmessers variabel.

Hier sind folgende 3 Varianten einstellbar:
Bei der ersten Variante sind diese Maße 24a und 24b gleich, bei der zweiten Variante ist das Maß 24a kleiner als das Maß 24b und bei der dritten Variante ist das Maß 24a größer als das Maß 24b

Der Abstand zwischen der Basiskontur Innen und der Basiskontur Außen kann zwischen dem Standkreisdurchmesser 10 und dem Außendurchmesser 8 über das Abstandsmaß 23 zwischen den Punkten H und B (Fig.3) definiert werden. Es ist möglich die Abstände 24b und 23 zwischen der Basiskontur Innen und der Basiskontur Außen zu variieren, insbesondere in Kombination mit den Varianten der Abstände 24a und 24b.

Dabei kann das Maß bzw. der Abstand 24b gleich, größer oder kleiner in Bezug auf das Abstandsmaß 23 sein.

Der Anfangspunkt J des Splines, wird bevorzugt durch eine Gerade zwischen den Punkten H und I erzeugt. Die Gerade HI ist tangential am Innenkontur Fußradius 21. Der Anfangspunkt J des Splines kann mit Hilfe eines Winkels 25 auf dem Innenkontur Fußradius 21 zwischen den Punkten I und K bestimmt werden. Das Maß des Innenkontur Fußradius 21 kann in einem Verhältnis zum Fußradius der Außenkontur 6 (vgl. Fig. 2 und 3) angegeben werden.

Fig. 8 zeigt eine Draufsicht auf einen Bodenabschnitt des Behältnisses. Man erkennt, dass hier 5 erste Verstärkungsrippen 122 bzw. Rillen und 5 zweite Verstärkungsrippen 124 bzw.

Rillen vorgesehen sind, die in einer Umfangsrichtung des Bodenabschnitts abwechselnd zueinander angeordnet sind. Dabei erstrecken sich die ersten Verstärkungsrippen in den Zentralbereich 112 hinein, die zweiten, in radialer Richtung R kürzeren Rippen 124 hingegen nicht. Wie in Figur 8 gezeigt, können Rillensegmente S gebildet bzw. definiert werden:

Ein Rillensegment besteht aus einer langen (122) und einer kurzen (124) Rille. Der Boden kann eine Anzahl von minimal 3 Rillensegmenten bis maximal 8 Rillensegmenten am Umfang beinhalten. Die Größe des Öffnungswinkels eines Rillensegements ergibt sich aus der verwendeten Anzahl an langen Rillen 122 (360°/Anzahl).

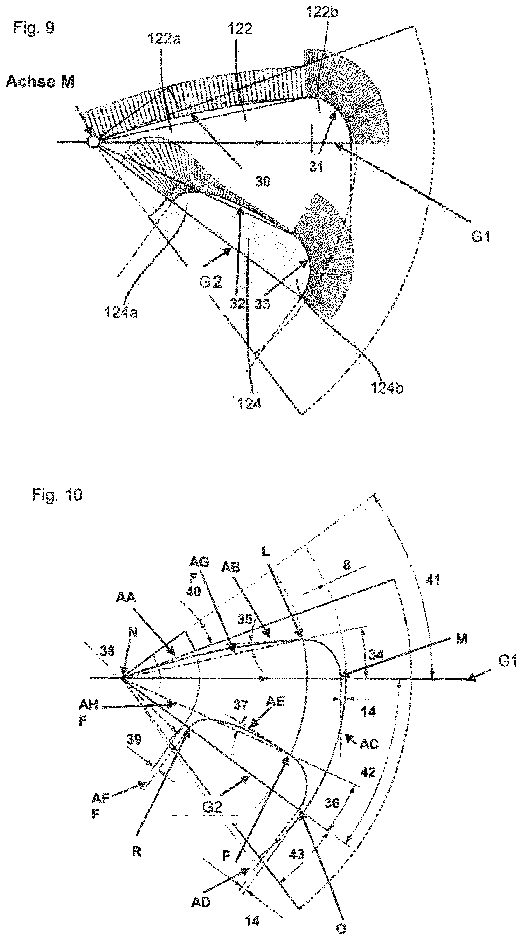

Die Fig. 9 und 10 veranschaulichen die Geometrie der Verstärkungsrippen insbesondere der längeren Verstärkungsrippen bzw. Rillen 122. Es wird hier darauf hingewiesen, dass im Rahmen der vorliegenden Anmeldung die beiden Begriffe Rillen und Rippen synonym verwendet werden.

Die Rillenausschnittsgeometrie für die lange Rille 122 wird durch den Spline 30 und den Spline 31 beschrieben. Dabei sind hier auch die jeweiligen Krümmungsradien durch die jeweils senkrecht von den Linien abstehenden senkrechten Linien veranschaulicht. Je länger diese Linien sind, desto kleiner ist der jeweilige Krümmungsradius. Auch die in dieser Figur dargestellten Linien ergeben sich wieder aus einer Projektion in einer radialen und senkrecht zu der Längsrichtung des Behältnis stehenden Richtung. Man erkennt, dass die erste Verstärkungsrippe durch einen ersten mit einem vorgegebenen größeren Krümmungsradius gebildeten Bereich 122a und einen zweiten, sich an den ersten Bereich anschließenden Bereich 122b mit einem zweiten Krümmungsradius gebildet wird. Dabei ist der zweite Krümmungsradius kleiner als der erste Krümmungsradius.

Bevorzugt ist der erste Krümmungsradius in dem Bereich 122a und besonders bevorzugt auch der zweite Krümmungsradius in dem Bereich 122b im Wesentlichen konstant.

Im Falle der zweiten Verstärkungsrippe 124 liegt betrachtet von innen nach außen zunächst ein hoher Krümmungsradius vor, der sich radial nach außen verringert (Bereich 124a). In dem sich daran anschließenden Bereich 124b ist der Krümmungsradius gleich oder im Wesentlichen gleich dem Krümmungsradius in dem Bereich 122b. Die geometrische Struktur der beiden Bereiche 122b und 124b ist ähnlich und bevorzugt im Wesentlichen identisch.

Der Spline 30 ist im Punkt N tangentenstetig zu der Hilfsgeraden AA und in dem Punkt L tangentenstetig zu der Hilfsgeraden AB. Diese beiden Hilfsgeraden schließen miteinander einen Winkel ein, der kleiner ist als 20°, bevorzugt kleiner als 10°.
Der Spline 31 ist im Punkt L tangentenstetig zur Hilfsgeraden AB und im Punkt M tangentenstetig zur Hilfsgeraden AC.

Die Krümmungsverläufe der Splines 30 und 31 können durch ein Polynom n-ten Grades beschrieben werden, wobei n größer gleich 2 und bevorzugt kleiner 7 ist. Die Rillenausschnittsgeometrie für die lange Rille 122 ist bevorzugt spiegelsymmetrisch an der Geraden G1. Die Ausprägung des Spline 30 wird bevorzugt über eine kegelförmige Profilsteuerung mit einem vorgegebenen Rho-Wert erzeugt. Dieser Wert kann sich zwischen 0,01 und 0,99 bewegen, insbesondere zwischen 0,2 und 0,8.

Die Ausprägung des Spline 31 wird über eine kegelförmige Profilsteuerung mit einem Rho-Wert erzeugt. Dieser Wert kann sich zwischen 0,01 und 0,99 bewegen, insbesondere zwischen 0,2 und 0,6.

Die Hilfsgerade AC steht senkrecht auf der Geraden G1 im Punkt M. Der Punkt M kann sich von der Rotationsachse M aus betrachtet zwischen dem Maß des Standkreisdurchmessers 10 (Fig. 3) und dem Maß des Außendurchmessers 8 (Fig. 3) bewegen und wird über das Maß 14 (Fig.2 und Fig.10) definiert.

Der Punkt L bewegt sich auf der Hilfsgerade AG mit dem Öffnungswinkel 34 auf der Radienbahn des Punktes D (Fig.3 und Fig.5) der Basiskontur Außen. Dieser Öffnungswinkel liegt zwischen 5° und 40°, bevorzugt zwischen 10° und 20°.

Die Breite der langen Rille wird über den Winkel 34 definiert. Die Hilfsgerade AB beginnt im Punkt L und wird mit dem Winkel 35 gesteuert. Die Hilfsgerade AA beginnt im Punkt N und wird mit dem Winkel 40 gesteuert. Über die Winkel 35,40 und den dazugehörigen Rho-Wert wird das Profil des Splines 30 gesteuert. Über die Winkel 34, 35 und dazugehörigen Rho-Wert wird das Profil des Splines 31 gesteuert, wobei der Winkel 35 zwischen 1 ° und 30°, bevorzugt zwischen 3° und 15° liegt, und der Winkel 40 zwischen 5° und 40°, bevorzugt zwischen 10° und 20° liegt.

Die Rillenausschnittsgeometrie für die kurze Rille 124 wird durch den Spline 32, und den Spline 33 beschrieben. Der Spline 32 ist bevorzugt in dem Punkt R tangentenstetig zu der Hilfsgeraden AF und in dem Punkt P tangentenstetig zu der Hilfsgeraden AE. Der Spline 33 ist in dem Punkt P tangentenstetig zur Hilfsgeraden AE und in dem Punkt O tangentenstetig zu der Hilfsgeraden AD.

Die Krümmungsverläufe der Splines 32 und 33 können durch ein Polynom n-ten Grades beschrieben werden, wobei n größer gleich 2 und bevorzugt kleiner 7 ist. Die Rillenausschnittsgeometrie für die kurze Rille ist spiegelsymmetrisch an der Geraden 2. Die Ausprägung des Spline 32 wird über eine kegelförmige Profilsteuerung mit einem Rho-Wert erzeugt. Dieser Wert kann sich zwischen 0,01 und 0,99 bewegen, insbesondere zwischen 0,1 und 0,7. Die Ausprägung des Spline 33 wird über eine kegelförmige Profilsteuerung mit einem Rho-Wert erzeugt. Dieser Wert kann sich zwischen 0,01 und 0,99 bewegen, insbesondere zwischen 0,2 und 0,6.

Die Gerade G2 wird über den Winkel 42 gesteuert, dieser ist definiert mit der Hälfte des Öffnungswinkels eines Rillensegments. Die Hilfsgerade AD steht bevorzugt im Wesentlichen und besonders bevorzugt senkrecht auf der Geraden G2 im Punkt O. Der Punkt O kann sich von der Rotationsachse (Achse M) aus betrachtet zwischen dem Maß des Standkreisdurchmessers 10 (Fig. 3) und dem Maß des Außendurchmessers 8 (Fig. 3) bewegen und wird über das Maß 14 (Fig.3 und Fig.10) definiert.

Der Punkt P bewegt sich auf der Hilfsgerade AH mit dem Öffnungswinkel 36 auf der Radienbahn des Punktes D (Fig.3 und Fig.5) der Basiskontur Außen. Die Breite der kurzen Rille wird über den Winkel 36 definiert, wobei der Winkel 36 bevorzugt zwischen 5° und 40°, besonders bevorzugt zwischen 10° und 20° liegt. Die Hilfsgerade AE beginnt im Punkt P und wird mit dem Winkel 37 gesteuert, wobei der Winkel 37 bevorzugt zwischen 1 ° und 30°, besonders bevorzugt zwischen 3° und 15° liegt. Die Hilfsgerade AF beginnt im Punkt R und steht senkrecht auf der Geraden 2. Über die Winkel 37 und den dazugehörigen Rho-Wert wird das Profil des Splines 32 gesteuert. Über die Winkel 37 und dazugehörigen Rho-Wert wird das Profil des Splines 33 gesteuert.

Der Punkt R wird über den Abstand 39 zum Radius 38 definiert. Der Radius 38 steht in einem Verhältnis zum kleinen Domradius 1 (Fig. 3 und 5). Die Winkel 34 und 36, zur Steuerung der Breite der kurzen und langen Rille können gleich oder unterschiedlich groß sein. Die Winkel 35 und 37, zur Steuerung der Hilfsgeraden AB und AE, können gleich oder unterschiedlich groß sein.

Die Rho-Werte der Splines 31 und 33 können gleich oder unterschiedlich groß sein.
Die Rho-Werte der Splines 30 und 32 können gleich oder unterschiedlich groß sein.

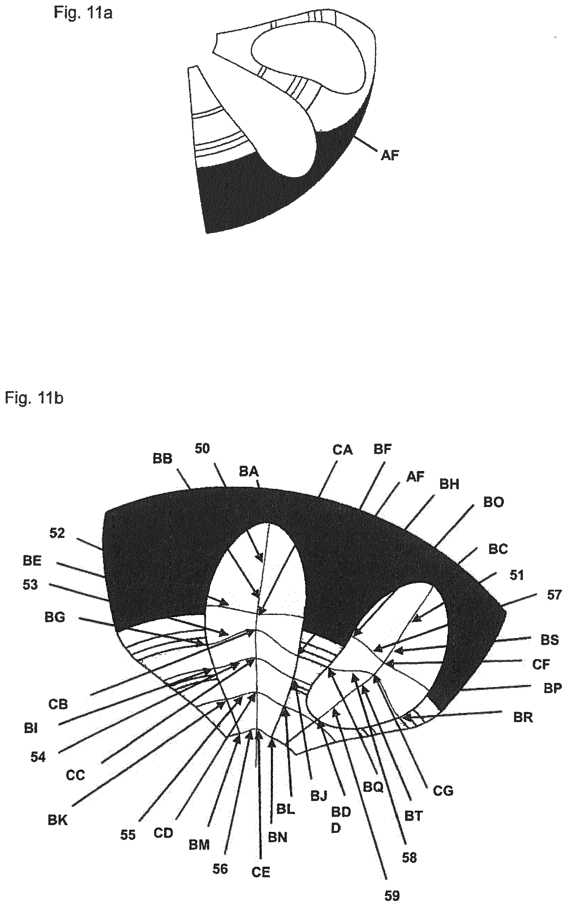

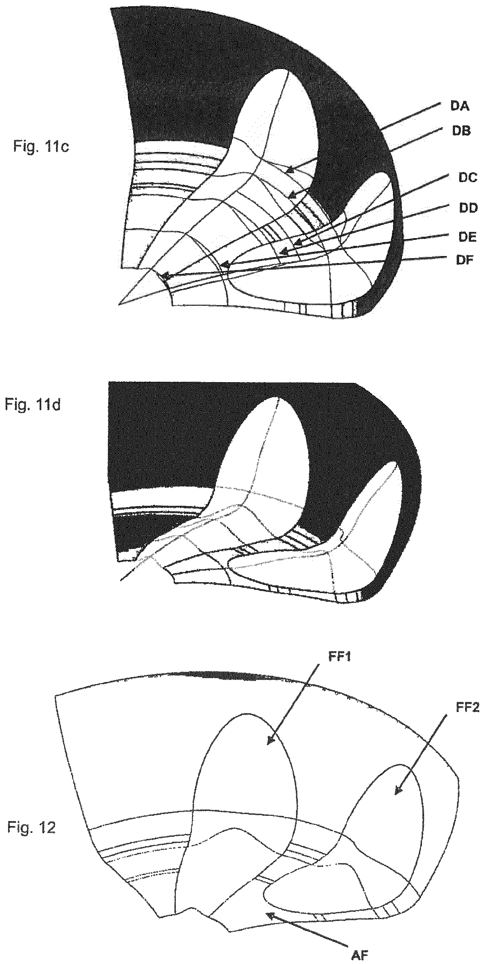

Die Figuren 11a - 11d beschreiben eine Verbindung der Basiskontur Außen, aus einer in den obigen Figuren 2 - 5 gezeigten Ausführungsformen mit Freiformflächen für die lange (122) und kurze (124) Rille.

Die Außenfläche AF wird an den Flächen der Rillenausschnittsgeometrien die durch die Splines 30,31 (lange Rille 122) und die Splines 32,33 (kurze Rille 124) entstehen, getrimmt.

An konstruktionswichtigen Punkten werden mit Hilfe von Hilfsflächen Schnittkurven Außenfläche AF (in Fig. 11b schwarz hervorgehoben) erzeugt. Die Endpunkte BA bis BT, der Schnittkurven an der Außenfläche der Basiskonturen Innen und Außen werden mit Splines 50 bis 59 verbunden. Die Punkte CA bis CG der Schnittkurven mit der Basiskontur Innen werden als Stützpunkte der Splines 52 bis 58 verwendet, die Splines können an den Stützpunkten (bevorzugt) krümmungsstetig oder tangentenstetig, mindestens aber punktstetig zu den Hilfsschnittkurven DA bis DF der Punkte CA bis CG sein.

Der Übergang der Splines 50 bis 59 in den Endpunkten BA bis BT kann krümmungsstetig, mindestens aber tangentenstetig zur Außenfläche sein.

Diese Splines 52 bis 58 haben einen Krümmungsverlauf der durch ein Polynom n-ten Grades beschrieben werden, wobei n größer gleich 2 und bevorzugt kleiner 7 ist.

Die untenstehende Tabelle gibt Beispiele für die Stetigkeiten an:

| Varianten | Endpunkte BA bis BT | Stützpunkte CA bis CG |
|---|---|---|
| A | G1 - Tangentenstetigkeit | G0 - Punktstetigkeit |
| B | G1 - Tangentenstetigkeit | G1 - Tangentenstetigkeit |
| C | G1 - Tangentenstetigkeit | G2 - Krümmungstetigkeit |
| D | G2 - Krümmungstetigkeit | G0 - Punktstetigkeit |
| E | G2 - Krümmungstetigkeit | G1 - Tangentenstetigkeit |
| F | G2 - Krümmungstetigkeit | G2 - Krümmungstetigkeit |

Fig. 12 zeigt eine weitere perspektivische Darstellung eines Bodenabschnitts.

An der Flächenkante der Außenfläche AF, der Basiskontur Innen und den Splines 50 bis 59 (Fig. 11b) werden die Freiformflächen FF1 und FF2 für die kurze und lange Rille erzeugt. Diese Freiformflächen FF1 und FF2 können krümmungsstetig, mindestens aber tangentenstetig zu der Außenfläche AF sein.

Bevorzugt wird daher der Bodenabschnitt unter Verwendung von Freiformflächen gebildet.

Der Krümmungsverlauf in u- und v-Richtung der Freiformfläche FF1 und FF2 des Rillensegments kann durch Polynome n-ten Grades beschrieben werden, wobei n größer gleich 2 und bevorzugt kleiner 7 ist.

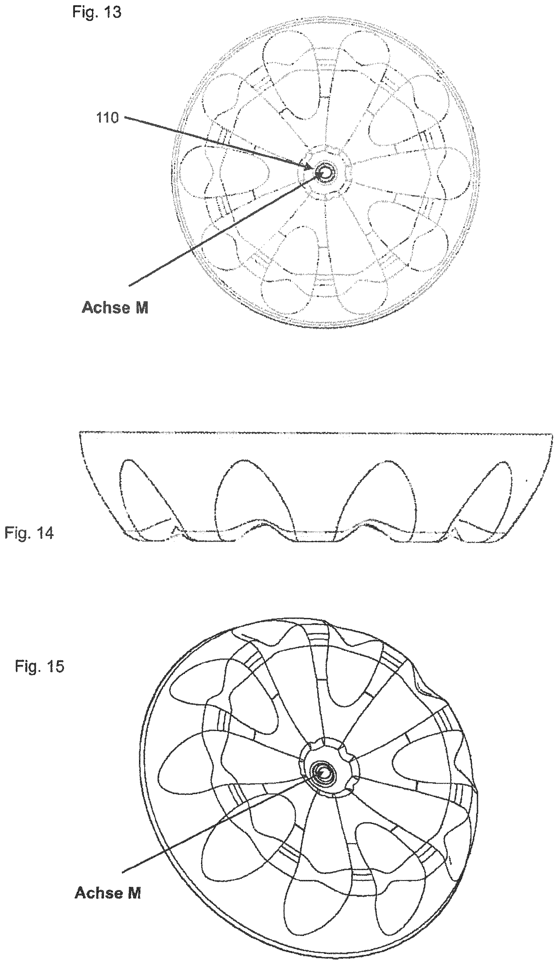

Die Fig. 13 und 14 zeigen zwei weitere Darstellungen des Bodenabschnitts.

Das Rillensegment wird mit der Anzahl der langen Rillen, die vorher definiert worden ist, um die Rotationsachse (Achse M), vervielfältigt. Ein Anspritzpunkt 110 zur Zentrierung des Preforms wird ergänzt und damit ergibt sich der Freiformboden für stille und leicht druckbeaufschlagte Produkte bis 2,0bar.

Fig. 13 zeigt die Ansicht von unten und Fig. 14 zeigt die Seitenansicht eines Freiformbodens für stille und leicht druckbeaufschlagte Produkte bis 2,0 bar mit 5 kurzen und 5 langen Rillen.

Fig. 15 zeigt eine gedrehte Ansicht von unten und Fig. 16 zeigt einen Schnitt durch eine kurze und eine lange Rille des Freiformbodens für stille und leicht druckbeaufschlagte Produkte bis 2,0 bar mit 5 Schleifen.

Die Fig. 17a-c zeigen Ausschnittsdarstellungen des Bodenabschnitts. Hierbei ist einerseits wiederum die Innenfläche IF dargestellt, daneben ist jedoch auch erkennbar, dass sich die jeweiligen Verstärkungsrippen bzw. Rillen 122, 124 auch in einen Bereich der Seitenwandung (bzw. einen seitlichen Bereich des Bodenabschnitts) des Kunststoffbehältnisses erstrecken. Mit anderen Worten sind diese Verstärkungsrippen auch in einer Ansicht des Behältnisses in einer radialen Richtung des Behältnisses sichtbar (in welcher der Boden selbst nicht von unten sichtbar ist). Auch erkennt man wiederum, dass die Verstärkungsrippen in denjenigen Abschnitten, welche sich in den seitlichen Bereich des Bodenabschnitts erstrecken, geometrisch gleich gestaltet sind.

## Patentansprüche

1. Kunststoffbehältnis (100) zur Aufnahme von Getränken, mit einer Mündung (102), einem sich in einer Längsrichtung (L) des Kunststoffbehältnisses (100) an diese Mündung (102) anschließenden Wandabschnitt (104) und einem als Standfläche ausgebildeten Bodenabschnitt (106) wobei das Kunststoffbehältnis (100) einteilig ausgebildet ist, und wobei der Bodenabschnitt (106) einen in einer radialen Richtung (R) bezüglich der Längsrichtung (L) innen liegenden Anspritzpunkt (110) an der Außenwandung des Kunststoffbehältnisses (100) aufweist und einen diesen Anspritzpunkt (110) umgebenden Zentralbereich (112) aufweist, sowie einen sich von diesem Zentralbereich (112) zu dem Wandabschnitt (104) erstreckenden Übergangsabschnitt (114, 116, 118), wobei dieser Übergangsabschnitt (114, 116, 118) in wenigstens einer und bevorzugt in jeder radialen Richtung (R) des Kunststoffbehältnisses (100) in wenigstens einem Teilabschnitt eine Krümmung mit einem endlichen Krümmungsradius (2, 3, 4) aufweist, und wobei in dem Bodenabschnitt (106) eine Vielzahl von Verstärkungsrippen (122, 124) vorgesehen ist, die sich ausgehend von dem Zentralbereich (112) in Richtung des Wandabschnitts (104) erstrecken, wobei der Zentralbereich (112) eine erste domartige Struktur (130) derart aufweist, dass der Anspritzpunkt (110) in der Längsrichtung (L) des Kunststoffbehältnisses (100) in Richtung der Mündung (102) des Kunststoffbehältnisses (100) ragt und sich an die erste domartige Struktur (130) des Zentralbereichs (112) in der radialen Richtung nach außen eine zweite domartige Struktur (140) des Übergangsabschnitts (114, 116, 118) anschließt, wobei diese zweite domartige Struktur in Richtung der Mündung (102) des Kunststoffbehältnisses (100) gewölbt ist, wobei ein Krümmungsradius der ersten domartigen Struktur (130) wenigstens abschnittsweise geringer ist als ein Krümmungsradius der zweiten domartigen Struktur (140), wobei der besagte Zentralbereich (112) einen kreisförmigen Querschnitt aufweist und domartig oder kuppelartig ausgebildet ist, sodass auf diese Weise der Anspritzpunkt des Behältnisses selbst in Richtung des Innenvolumens ragt, was dazu führt, dass auch bei einer Druckbelastung der Anspritzpunkt nicht in der Längsrichtung des Behältnisses nach unten hervorsteht und dessen Standsicherheit behindert, und wobei wenigstens ein Bereich (112, 114, 116, 118) des Bodenabschnitts (106) in einen weiteren Bereich (112, 114, 116, 118) des Bodenabschnitts (106) tangentenstetig übergeht,
**dadurch gekennzeichnet, dass**
ein Krümmungsradius in der ersten domartigen Struktur des Zentralbereichs in einem Bereich zwischen 5,00 mm und 20,0 mm, insbesondere zwischen 8,0 mm und 15,0 mm liegt und der Krümmungsradius der zweiten domartigen Struktur in einem Bereich zwischen 40,0 mm und 120 mm, insbesondere zwischen 50,0 mm und 90,0 mm liegt, und weiter wobei ein Verhältnis zwischen dem Krümmungsradius in der ersten domartigen Struktur und dem Krümmungsradius in der zweiten domartigen Struktur zwischen 0,02 und 0,5 liegt.

2. Kunststoffbehältnis (100) nach Anspruch 1, **dadurch gekennzeichnet, dass** eine Standfläche des Kunststoffbehältnisses (100) wenigstens abschnittsweise ringförmig ausgebildet ist, wobei diese Standfläche einen vorgegebenen Standkreisdurchmesser (10) aufweist.

3. Kunststoffbehältnis (100) nach Anspruch 2,
**dadurch gekennzeichnet, dass**
ein Verhältnis zwischen dem Standkreisdurchmesser (10) und einem Außendurchmesser des Kunststoffbehältnisses (100) zwischen 0,5 und 0,95, bevorzugt zwischen 0,6 und 0,95, bevorzugt zwischen 0, 615 und 0,935, bevorzugt zwischen 0,65 und 0,9 und besonders bevorzugt zwischen 0,65 und 0,85 liegt.

4. Kunststoffbehältnis (100) nach wenigstens einem der vorangegangenen Ansprüche,
**dadurch gekennzeichnet, dass**
der Bodenabschnitt (106) in dem Bereich einer Standfläche des Bodenabschnitts (106) einen Abschnitt (126) mit einem geradlinigen Verlauf aufweist.

5. Kunststoffbehältnis (100) nach Anspruch 4,
**dadurch gekennzeichnet, dass**
der Abschnitt (126) eine Länge aufweist die zwischen 0,01 mm und 2 mm liegt.

6. Kunststoffbehältnis (100) nach wenigstens einem der vorangegangenen Ansprüche,
**dadurch gekennzeichnet, dass**
eine Standfläche des Kunststoffbehältnisses von den ersten Verstärkungsrippen (122) unterbrochen ist.

7. Verwendung eines Kunststoffbehältnisses nach wenigstens einem der vorangegangenen Ansprüche für Stillgetränke und insbesondere stille und leicht druckbeaufschlagte Produkte.

8. Blasform zum Herstellen eines Kunststoffbehältnisses nach wenigstens einem der vorangegangenen Ansprüche 1 bis 6, **dadurch gekennzeichnet, dass** diese Blasform ein Bodenteil aufweist, welches zur Erzeugung eines Bodenabschnitts dieses Kunststoffbehältnisses geeignet und bestimmt ist.

## Claims

1. A plastics material container (100) for the reception of beverages, with an mouth (102), a wall portion (104) adjoining this mouth (102) in a longitudinal direction (L) of the plastics material container (100) and a base portion (106) designed in the form of a standing face, wherein the plastics material container (100) is formed in one piece, and wherein the base portion (106) has an injection point (110) situated on the inside in a radial direction (R) with respect to the longitudinal direction (L) on the outer wall of the plastics material container (100) and has a central area (122) which surrounds this injection point (110), as well as a transition portion (114, 116, 118) which extends from this central area (112) to the wall portion (104), wherein this transition portion (114, 116, 118) has in at least one radial direction (R) and preferably in each radial direction (R) of the plastics material container (100) a curvature with a finite radius of curvature (2, 3, 4) in at least one portion, and wherein the base portion (106) has provided in it a plurality of reinforcement ribs (122, 124) which starting from the central area (112) extend in the direction of the wall portion (104), wherein the central area (112) has a first dome-like structure (130), in such a way that the injection point (110) projects in the direction of the aperture (102) of the plastics material container (100) in the longitudinal direction (L) and the first dome-like structure (130) of the central area (112) is adjoined in the radial direction on the outside by a second dome-like structure (140) of the transition portion (114, 116, 118), wherein this second dome-like structure is arched in the direction of the aperture (102) of the plastics material container (100), wherein a radius of curvature of the first dome-like structure (130) is smaller at least locally than a radius of curvature of the second dome-like structure (140), wherein said central area (112) has a circular cross-section and is of cupola or dome-like shape, in this way, the injection point of the container itself protrudes in the direction of the inner volume, which means that even under pressure loading, the injection point does not protrude downwards in the longitudinal direction of the container and impairs its standing stability, and wherein at least one portion (112, 114, 116, 118) of the base portion (106) merges in a tangentially continuous manner into a further portion (112, 114, 116, 118) of the base portion (106),
**characterized in that**
a radius of curvature in the first dome-like structure of the central area is in a range between 5.00 mm and 20.0 mm, preferably between 8.0 mm and 15.0 mm and the radius of curvature of the second dome-like structure lies in an area between 40.0 mm and 120 mm, preferably between 50.0 mm and 90.0 mm, and further wherein a relationship between the radius of curvature in said first dome-like structure and the radius of curvature in said second dome-like structure is between 0.02 and 0.5.

2. A plastics material container (100) according to claim 1,
**characterized in that**
a standing face of the plastics material container (100) is made annular at least locally, wherein this standing face has a pre-set standing circle diameter (10).

3. A plastics material container (100) according to claim 2,
**characterized in that**
a ratio between the standing circle diameter (10) and an external diameter of the plastics material container (100) is between 0.5 and 0.95, preferably between 0.6 and 0.95, preferably between 0.615 and 0.935, preferably between 0.65 and 0.9, and in a particularly preferred manner between 0.65 and 0.85.

4. A plastics material container (100) according to at least one of the preceding claims,
**characterized in that**
the base portion (106) in the region of a standing face of the base portion (106) has a portion (126) with a straight course.

5. A plastics material container (100) according to claim 4,
**characterized in that**
the portion (126) has a length which is between 0.01 mm and 2 mm.

6. A plastics material container (100) according to at least one of the preceding claims,
**characterized in that**
a standing face of the plastics material container is interrupted by the first reinforcement ribs (122).

7. Use of a plastics material container (100) according to at least one of the preceding claims for still beverages, and in particular still products lightly acted upon with pressure.

8. A blow mould for producing a plastics material container according to at least one of the preceding claims 1 to 6,
**characterized in that**
this blow mould has a base part which is suitable and intended to produce a base portion of this plastic container.

## Revendications

1. Récipient en matière plastique (100) pour la réception de boissons, avec une embouchure (102), une section de paroi (104) se raccordant à cette embouchure (102) dans une direction longitudinale (L) du récipient en matière plastique (100) et une section de fond (106) réalisée en tant que surface d'appui dans lequel le récipient en matière plastique (100) est réalisé d'un seul tenant, et dans lequel la section de fond (106) présente un point d'injection (110) situé à l'intérieur dans une direction radiale (R) par rapport à la direction longitudinale (L) au niveau de la paroi extérieure du récipient en matière plastique (100) et une zone centrale (112) entourant ce point d'injection (110), ainsi qu'une section de transition (114, 116, 118) s'étendant de cette zone centrale (112) à la section de paroi (104), dans lequel cette section de transition (114, 116, 118) présente dans au moins une et de préférence dans chaque direction radiale (R) du récipient en matière plastique (100) dans au moins une section partielle une courbure avec un rayon de courbure fini (2, 3, 4), et dans lequel dans la section de fond (106) une pluralité de nervures de renforcement (122, 124) est prévue, qui s'étendent à partir de la zone centrale (112) en direction de la section de paroi (104), dans lequel la zone centrale (112) présente une première structure en forme de dôme (130) de telle manière que le point d'injection (110) dépasse dans la direction longitudinale (L) du récipient en matière plastique (100) en direction de l'embouchure (102) du récipient en matière plastique (100) et une deuxième structure en forme de dôme (140) de la section de transition (114, 116, 118) se raccorde à la première structure en forme de dôme (130) de la zone centrale (112) dans la direction radiale vers l'extérieur, dans lequel cette deuxième structure en forme de dôme est courbée en direction de l'embouchure (102) du récipient en matière plastique (100), dans lequel un rayon de courbure de la première structure en forme de dôme (130) est au moins par section inférieur à un rayon de courbure de la deuxième structure en forme de dôme (140), dans lequel ladite zone centrale (112) présente une coupe transversale circulaire et est réalisée en forme de dôme ou de coupole, si bien que de cette manière le point d'injection du récipient lui-même dépasse en direction du volume intérieur, ce qui conduit au fait que même en cas de contrainte de compression, le point d'injection ne fait pas saillie vers le bas dans la direction longitudinale du récipient et n'entrave pas sa stabilité, et dans lequel au moins une zone (112, 114, 116, 118) de la section de fond (106) se transforme de manière tangente continue en une autre zone (112, 114, 116, 118) de la section de fond (106),
**caractérisé en ce que**
un rayon de courbure dans la première structure en forme de dôme de la zone centrale se situe dans une plage entre 5,00 mm et 20,0 mm, en particulier entre 8,0 mm et 15,0 mm et le rayon de courbure de la deuxième structure en forme de dôme se situe dans une plage entre 40,0 mm et 120 mm, en particulier entre 50,0 mm et 90,0 mm, et en outre dans lequel un rapport entre le rayon de courbure dans la première structure en forme de dôme et le rayon de courbure dans la deuxième structure en forme de dôme se situe entre 0,02 et 0,5.

2. Récipient en matière plastique (100) selon la revendication 1,
**caractérisé en ce que**
une surface d'appui du récipient en matière plastique (100) est réalisée au moins par section de manière annulaire, dans lequel cette surface d'appui présente un diamètre de cercle d'appui (10) prédéfini.

3. Récipient en matière plastique (100) selon la revendication 2,
**caractérisé en ce que**
un rapport entre le diamètre de cercle d'appui (10) et un diamètre extérieur du récipient en matière plastique (100) se situe entre 0,5 et 0,95, de préférence entre 0,6 et 0,95, de préférence entre 0,615 et 0,935, de préférence entre 0,65 et 0,9 et de manière particulièrement préférée entre 0,65 et 0,85.

4. Récipient en matière plastique (100) selon au moins l'une quelconque des revendications précédentes,
**caractérisé en ce que**
la section de fond (106) présente dans la zone d'une surface d'appui de la section de fond (106) une section (126) à allure rectiligne.

5. Récipient en matière plastique (100) selon la revendication 4,
**caractérisé en ce que**
la section (126) présente une longueur qui se situe entre 0,01 mm et 2 mm.

6. Récipient en matière plastique (100) selon au moins l'une quelconque des revendications précédentes,
**caractérisé en ce que**
une surface d'appui du récipient en matière plastique est interrompue par les premières nervures de renforcement (122).

7. Utilisation d'un récipient en matière plastique selon au moins l'une quelconque des revendications précédentes pour des boissons non gazeuses et en particulier pour des produits non gazeux et soumis à une faible pression.

8. Moule de soufflage pour la fabrication d'un récipient en matière plastique selon au moins l'une quelconque des revendications précédentes 1 à 6,
**caractérisé en ce que**
ce moule de soufflage présente un élément de fond, qui convient et est destiné à la génération d'une section de fond de ce récipient en matière plastique.
